# EUROPEAN PATENT SPECIFICATION

(11) **EP 4 357 151 B1**
(45) Date of publication and mention of the grant of the patent: **18.02.2026**
(21) Application number: 22383015.9
(22) Date of filing: 21.10.2022
(51) Int. Cl.: B60B 7/04, B60B 7/06, B60B 7/08

(54) **INSERT FOR VEHICLE WHEELS**
EINSATZ FÜR FAHRZEUGRÄDER
INSERT POUR ROUES DE VÉHICULE

(43) Date of publication of application: 24.04.2024
(73) Proprietor: Zanini Auto Grup, S.A., 08150 Parets del Vallés - Barcelona (ES)
(72) Inventor: DURÁN BOFILL, Pedro, 08150 PARETS DEL VALLÉS (Barcelona) (ES); COROMINAS SERRAT, Xavier, 08150 PARETS DEL VALLÉS (Barcelona) (ES); NOVELL PERELLO, Ramón Maria, 08150 PARETS DEL VALLÉS (Barcelona) (ES); DOMINGUEZ MARTINEZ, Carlos Javier, 08150 PARETS DEL VALLÉS (Barcelona) (ES); UCHER TENA, Juan Jose, 08150 PARETS DEL VALLÉS (Barcelona) (ES); EGUINOA DE SAN ROMAN, Gonzalo, 08150 PARETS DEL VALLÉS (Barcelona) (ES); DOMINGUEZ SANTALO, Guillem, 08150 PARETS DEL VALLÉS (Barcelona) (ES)
(74) Representative: Herrero & Asociados, S.L.

(56) References cited:
- EP-A1- 4 056 382
- DE-U1- 202021 101 794
- JP-U- H0 655 806
- KR-A- 20110 131 930

## Description

The present invention relates to an insert for vehicle wheels, comprising means for fixing it into a vehicle wheel.

### Background of the invention

It is common to use inserts in the wheels of vehicles for aesthetic reasons, wheel weight reduction or aerodynamic improved behavior. Normally these inserts are made of plastic material and are fixed to the wheel rim, which is made of metal.

The inserts must be fixed to the rim of the vehicle wheel in a reliable way, which prevents the inserts from detaching from the rim for a long time, considering the stresses to which they are subjected due to the speed of rotation of the wheel, wind force, and vibrations.

Different types of means for fixing these inserts to vehicle rims are currently known.

A first type of inserts is attached to the wheel rims by means of screws, which must be screwed in from the inside of the wheel. This type of fixing means has the advantage that it is very reliable, since the connection between the insert and the wheel is very durable. However, this type of fixing means has the drawback that it is inconvenient to install, since it requires screwing from the inside of the wheel.

The methods of fixing the plastic inserts to the wheel by means of screws from the inside of the wheel imply that the assembly of the plastic inserts is carried out by the supplier of the wheel and not on the assembly line of the vehicle manufacturer with the corresponding assembly cost. The vehicle manufacturer is in favor of the front mounting of the plastic inserts in the wheel on their assembly line or by the dealer.

The fixing system of the plastic inserts by means of screws from the inside of the rim forces the vehicle manufacturer to have more space in its manufacturing plant for the storage of wheels with different references of plastic inserts. This scenario is especially critical when a large number of plastic insert references (different shape or finishes) can be mounted on the same wheel.

Consequently, the system for fixing the inserts by means of screws from inside the wheel greatly hinders the flexibility desired by the vehicle manufacturer in customizing the vehicle wheel by mounting different plastic inserts on the wheel.

A second type of inserts are attached to the rims by means of adhesive, for example, a double-sided adhesive tape. This fixation system has been shown in practice to be inadequate since its fixation is permanent and does not allow the insert to be removed and replaced with another.

A particular case of inserts that are fixed either by screws or by glue are the chrome plated ones. The screws fixation needs to be done as explained above from the rear side of the wheel meanwhile the glue fixation is very expensive and permanent, therefore in the case the insert is damaged needs to substitute the whole wheel.

It is also known from document WO 2015/059317 A1, of the same applicant as the present application, an insert for vehicle wheels comprising fixing means comprising a plurality of projections, each of which is associated with a fixing element that is a protrusion element with a hole of the wheel in the vent pocket area.

A third type of retention is required when the wheel is intended to be used with insert or without insert. In this case is not acceptable to have a protrusion to fix the insert either with a screw or with a system of retention like the one in the document WO 2015/059317 A1 because of aesthetic reasons.

The insert in this case usually is assembled from the front side and usually uses the vent pockets of the wheel with clips that retain the insert in the back side of the wheel. The clips must be very strong to avoid the insert fly out due to the high rotation of the wheel, wind force or vibrations in the current use of a car. Because of that it can cause scratches in the vent pockets during the assembly or disassembly of the insert, being this one of the major problems of this type of retention.

In the case the insert is chrome plated the only way to use this type of fixation is using a selective chrome plating process where the whole part is chromed with the exception of the retaining fixtures and the supporting ribs but is difficult to control the unplated area apart from the fact that the cost of this process is huge.

Actual solutions in the market are based on using a material on the area of the clip that contacts the wheel pocket with soft or with lubrication characteristics to reduce or avoid the level of scratches.

On the other side, these kinds of materials used to be not compatible with the function of the insert or cannot resists the high level of temperatures in the environment of the wheel that mainly come from the breaks. Therefore, the location of these materials used to be restricted to the area of the clip head using complex and expensive production processes.

Another area where the scratches appear is in the areas of the wheel where the insert lays on. These contact supports are made by ribs that scratches these areas. A possible solution could be the use of wider surfaces instead of ribs, but in this case sink marks would appear in the visible side of the insert in these areas causing unacceptable appearance problems. Also adding in these areas materials with soft or with lubrication characteristics could avoid the scratches but also requires complex and expensive production processes.

JPH0655806U discloses an automobile wheel cap to be installed in an automobile wheel comprising a disc-shaped wheel cap body, and a mounting hole knob in the center.

KR20110131930A discloses a wheel cap comprising a case which is inserted to a wheel boss formed in a wheel, a hook which is caught on or released from the wheel boss by extending or reducing the diameter thereof within the case, and an operating member which converts the torque, which is applied to the exposed portion of the case, into the axial displacement and extends or reduces the diameter of the hook.

### Disclosure of the invention

Therefore, there is a clear need for an insert for use in a vehicle wheel that can be easily assembled in the vent pocket from the front side of the wheel and that do not provoke scratches when is assembled or disassembled maintaining the high retention forces required and with wider surfaces in the axial contact areas that do not provoke scratches and at the same time do not cause sink marks in the visible surfaces of the insert.

With the insert for wheels of the present invention, it is possible to solve the aforementioned drawbacks, presenting other advantages that will be described below.

The insert for vehicle wheels according to the present invention is described in claim 1, and dependent claims include additional optional features.

The insert of this invention comprises two parts, an aesthetical part and a structural part, which are preassembled in a delivery condition, in which they cannot be disassembled and have a gap between them.

The part that is at the back side of the insert when assembled is called structural part, and the part that is in the front side giving the aesthetics of the insert is called aesthetical part.

The structural part has in the area where the insert lays on the wheel, wider surfaces with round borders that avoids the presence of scratches. There is no risk of visible sink marks because this part is covered by the aesthetical part.

For the assembly of the insert to the wheel and the engagement of the two parts of the insert to each other, the structural part comprises fixing elements and complementary elements, and the aesthetical part comprises retaining elements and stiff elements.

The assembly of the insert to the wheel is made from the front side and has two continuous steps. In the first step the fixing elements of the structural part enter in a window of the wheel with a low interference. Because of the low interference and the low stiffness of this fixing means, the pressure of them to the side of wheel windows is very low and due to this fact, do not produce scratches.

When the insert continues the assembly process to the wheel, starts the second step of the installation. During this process, the stiff elements located in the back side of the aesthetical part start bending a pressing the fixing elements of the structural part up to the assembled position in the wheel and simultaneously the retention between the aesthetical part and the structural part moves from the original preassembly position to the final assembled position.

That means that both, structural and aesthetical parts, work together increasing dramatically the engagement and the stiffness of the retention and therefore providing a very strong retention to the wheel.

To remove the insert from the wheel, the process is the opposite; the aesthetical part is moved away from the structural part, until they are in the original preassembled position, such that the fixing elements in this condition make low pressure and the insert assembly is removed from the wheel without damaging the windows of the wheel.

Depending on the shape of the retaining elements the part can be designed to be not removable.

This invention is applicable to individual inserts that are assembled in a window of the wheel and to full inserts that covers total or partially the wheel. For example, a full insert assembled to a wheel with five windows will include the aesthetical part of the insert preassembled to five structural parts, one for each window.

According to a second embodiment, a metal spring is included in the retention area to maintain the pressure between the insert and the wheel, increasing the creep resistance of the system.

### Brief description of the drawings

For better understanding of what has been disclosed, some drawings in which, schematically and only by way of a non-limiting example, a practical case of embodiment is shown.
Figure 1 is a schematic and perspective view of the insert according to the first embodiment;
Figure 2 is a schematic and perspective view of the structural part of de insert assembly according to the first embodiment;
Figure 3 is a schematic and perspective view of the aesthetical part of the insert assembly according to the first embodiment;
Figure 4 is a schematic and perspective front view of the insert preassembled in the wheel;
Figure 5 is a schematic and perspective rear view of the insert preassembled in the wheel;
Figure 6 is a schematic and perspective front view of the insert assembled in the wheel;
Figure 7 is a schematic and perspective rear view of the insert assembled in the wheel;
Figure 8 is a schematic and perspective rear view of a full insert in the assembled position;
Figure 9 is a schematic and perspective rear view of the insert according to the second embodiment preassembled in the wheel; and
Figure 10 is a schematic and perspective rear view of the insert according to the second embodiment assembled in the wheel; and
Figure 11 is a schematic cross section of insert according to the second embodiment assembled in the wheel.

### Description of preferred embodiments

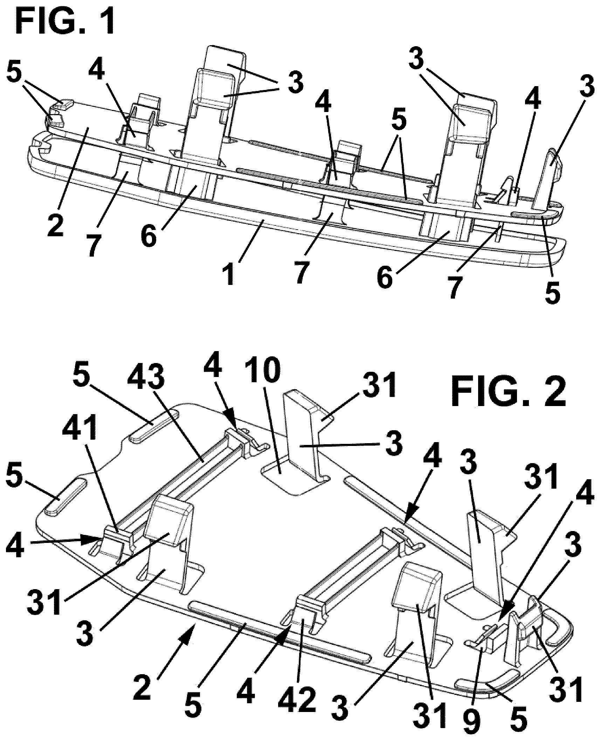

Figure 1 shows in perspective view a first embodiment of the insert for vehicle wheels according to the present invention.

The insert according to this embodiment comprises an aesthetic part (1), that can be unpainted, painted, chrome plated or with any other decoration system, and a structural part (2). These components are delivered in a preassembly position according to the picture and cannot be disassembled due to the design of retaining elements (7) and complementary elements (4) provided in the aesthetic part (1), and the structural part (2) respectively. Each fixing element (3) to the wheel comprises a protrusion (31) at its distal end with respect to the aesthetical part (1) and oriented outwardly.

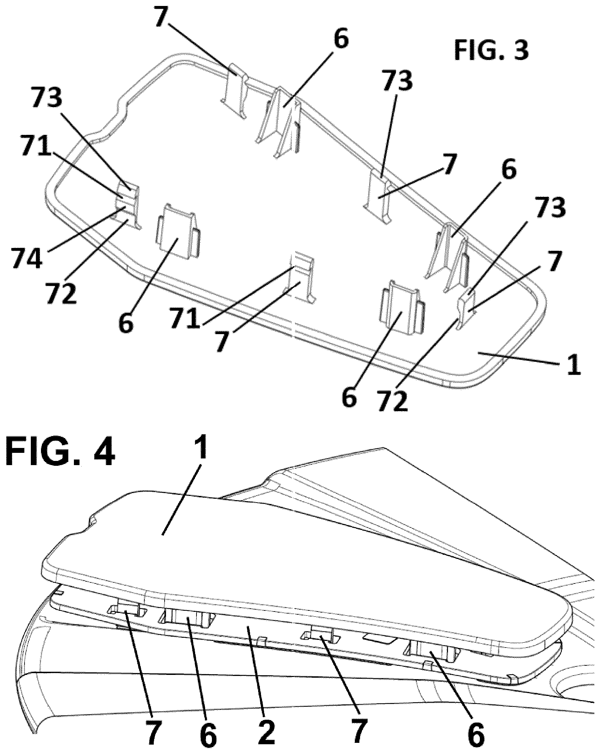

Figure 2 shows in a perspective view the structural part (2), comprising the fixing elements (3), for fixing the structural part to a wheel (not show), and complementary elements (4) to retaining elements (7) included in the aesthetical part (1), shown in figure 3. The complementary elements (4) comprise a wall (41) and a tab (42), and two complementary elements (4) can be connected to each other by bars (43), as shown in figure 2

The structural part (2) also includes support areas (5) to provide axial contact to the wheel. As shown, these support areas (5) have a big contact surface in order to avoid scratches in the corresponding area of the wheel.

Figure 3 shows a perspective view of the aesthetical part (1) from the retention area. The aesthetical part (1) comprises stiff elements (6) that, in the mounted position, bend and press the fixing elements (3) to the wheel when the aesthetical part (1) moves from the preassembled position to the assembled position. Each stiff element (6) can define a U-shaped profile having inclined walls, as shown in figure 3.

The combination of the fixing elements (3) working together with stiff elements (6) provides a strong retention to the wheel. The retaining elements (7) have two fixing positions with the complementary element (4) of the structural part (2).

Can be three types of retaining elements (7). First type of retaining element (7) defines a first portion (71) and a second portion (72), and it comprises a protrusion (73), which engage with the tab (42) of the complementary element (4) in the preassembled position

The retaining elements (7) can contain also only the first portion (71) or can contain only the second portion (72), the three types of retaining elements (7) can be present in the same aesthetical part (1).

The first portion (71) is the one that provides the preassembled position with the structural part (2) maintaining a gap with respect to the aesthetical part (1) and assuring both parts (1, 2) could not be disassembled.

When the first and second portions (71, 72) are included in the same retaining element (7), the first portion (71) and the second portion (72), are separated by a thickened portion (74) with a thickness greater than the thickness of the rest of the retaining element (7). The second portion (72) it is the one that provides the final assembled position between both parts (1, 2) and assures the fixation of the insert to the wheel. In the assembled position the tab (42) of the complementary element (4) engages with the transition area between the thickened portion (74) and the second portion (72) of the retaining element (7) and the stiff elements (6) bend and press the complementary fixing elements (3) increasing the engagement with the wheel and increasing the rigidity of fixing elements (3).

The insert can be removed from the wheel when the aesthetical part (1) is separated from the structural part (2) to the preassembled position. Also, and depending on the shape of the retaining element (7) the aesthetical part (1) can or cannot be separated from the structural part (2). In the case that is specified that the insert should not be removable, the concept design support this requirement having then an antitheft insert

As shown in figure 2, the structural part (2) comprises holes (9, 10) for the passage of the retaining elements (7) and the stiff elements (6) through the structural part (2) and permitting the engagement with the aesthetical part (1).

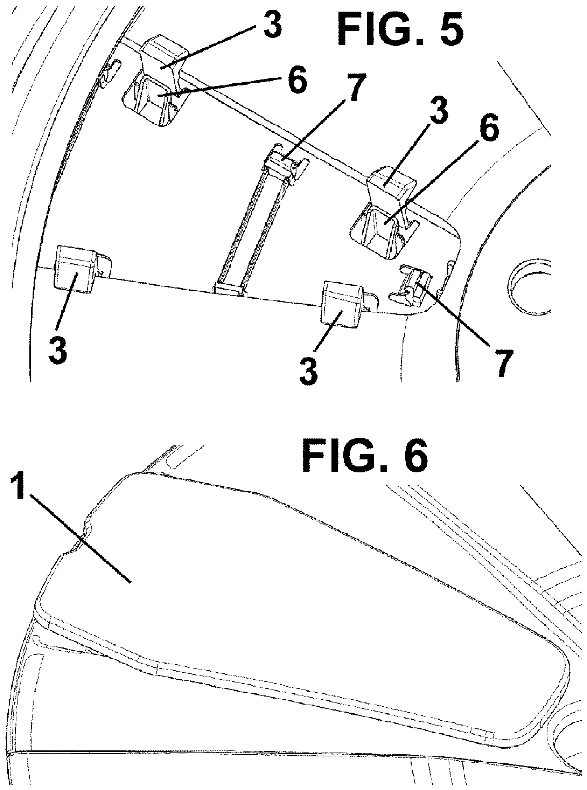

Figures 4 and 5 show perspective views of the insert in the preassembled position. As shown in figure 5, between the stiff elements (6) and the fixing elements (3) there is a gap or minor interference. Therefore, the pressure to the side wall of the wheel vent pocket during the preassembly process is very low, avoiding scratches.

Additionally, it can be seen that the retaining elements (7) and the complementary elements (4) between both parts (1, 2) of the insert are in the preassembly position.

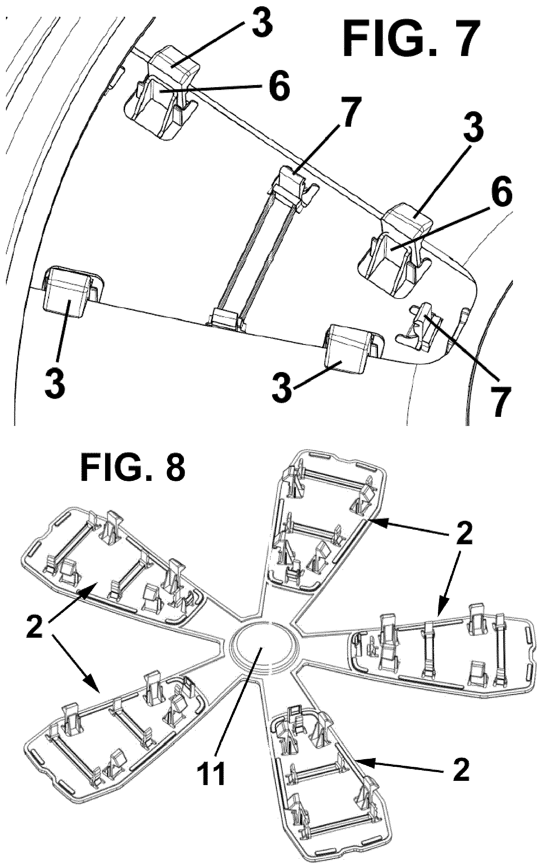

Figures 6 and 7 show perspective views of the insert in the final assembled position to the wheel. As shown in figure 7, the stiff elements (6) have bent the fixing elements (3) outwardly increasing the engagement with the wheel and increasing the rigidity of fixing elements (3) so assuring a strong retention to the wheel. Additionally, the retaining elements (7) and the complementary elements (4) between both parts (1, 2) of the insert are in the final assembled position.

When the insert is installed in the wheel, its parts (1, 2) pass from the preassembly to the assembled position in a continuous manner, so the operator only must press the insert until it is fully assembled.

Figure 8 shows the application of the present invention to a full insert. In the example is shown a full star type insert with the aesthetical part (1) preassembled to five structural parts (2), one structural part (2) for every wheel vent pocket. It is shown in assembled position but without the wheel for a better understanding of the concept.

As shown in figure 8, these aesthetical parts (1) are connected by connecting portions (11). The connecting portions can be located in the center as in the example or in any other positions.

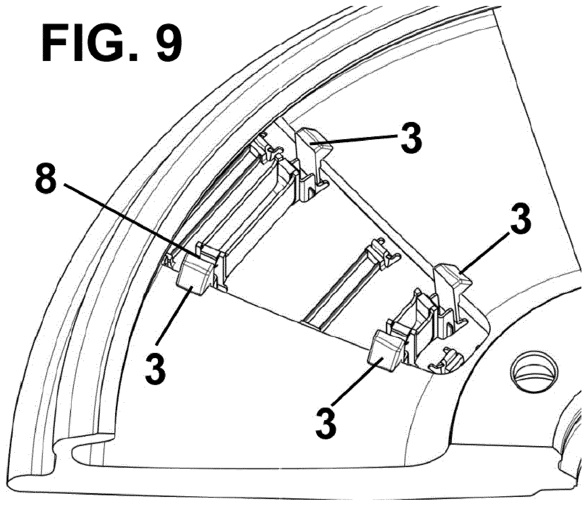

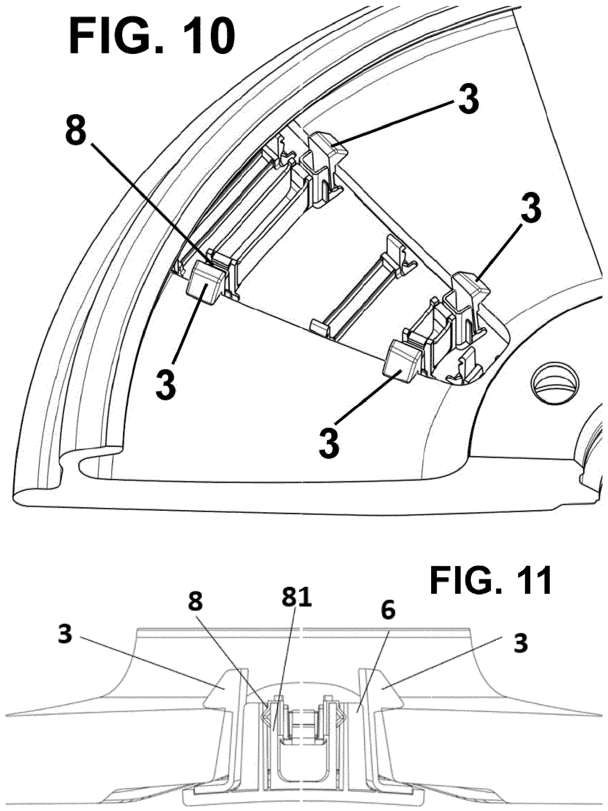

Figures 9 and 10 show a perspective view of the insert in the preassembled position and in the assembled position, respectively, in the wheel according to a second embodiment, and figure 11 is a cross sectional view through the fixing elements.

For simplicity reasons, the same numeral references have been used to identify the same or equivalent elements. The difference with respect to the first embodiment is that it includes a metal spring (8) between a spring support (81) of the structural part (2) and the stiff elements (6) of the aesthetical part (1).

## Claims

1. Insert for vehicle wheels, comprising:
a structural part (2) comprising fixing elements (3) configured to fix the structural part to a wheel; and
an aesthetical part (1) comprising stiff elements (6) and retaining elements (7) for retaining the aesthetical part (1) to the structural part (2), wherein the aesthetical part (1) and the structural part (2) are movable between a preassembled position and an assembled position, the aesthetical part (1) and the structural part (2) being inseparable to each other in the preassembled position, **characterized in that** the stiff elements (6) bend and press the fixing elements (3) to the wheel when the aesthetical part (1) moves from the preassembled position to the assembled position.

2. Insert for vehicle wheels according to claim 1, wherein when the aesthetical part (1) and the structural part (2) are in the preassembled position, there is a gap between them.

3. Insert for vehicle wheels according to claims 1 and 2, wherein when the aesthetical part (1) and the structural part (2) are in the assembled position, the gap between them is reduced with respect to the gap in the preassembled position, and the stiff elements (6) bend and press the complementary fixing elements (3).

4. Insert for vehicle wheels according to any one of the previous claims, wherein the structural part (2) comprises support areas (5) to contact the wheel.

5. Insert for vehicle wheels according to any one of previous claims, wherein the retaining elements (7) comprises a first portion (71) and/or a second portion (72).

6. Insert for vehicle wheels according to claim 5, wherein the retaining elements (7) comprises the first portion (71) and wherein in the preassembly position, the structural part (2) is retained by the first portion (71) of the retaining elements (7).

7. Insert for vehicle wheels according to claim 5, wherein the retaining elements (7) comprises the second portion (72) and wherein in the assembly position, the structural part (2) is retained by the second portion (72) of the retaining elements (7).

8. Insert for vehicle wheels according to claim 5, wherein the retaining elements (7) comprises the first portion (71) and the second portion (72) and wherein the first and second portions (71, 72) are included in the same retaining element (7), the first and second portions (71, 72) being separated by a thickened portion (74), having a thickness greater than the rest of the retaining element.

9. Insert for vehicle wheels according to any one of the previous claims, wherein each fixing element (3) comprises a protrusion (31) oriented outwardly.

10. Insert for vehicle wheels according to any one of the previous claims, wherein the structural part (2) comprises complementary elements (4) which are complementary with the retaining elements (7).

11. Insert for vehicle wheels according to claim 10, wherein each complementary element (4) comprises a wall (41) and a tab (42).

12. Insert for vehicle wheels according to any one of the previous claims, wherein the structural part (2) comprises holes (10) for the passage of the retaining elements (7).

13. Insert for vehicle wheels according to any one of the previous claims, wherein the structural part (2) comprises holes (9) for the passage of the stiff elements (6).

14. Insert for vehicle wheels according to any one of the previous claims, wherein a spring (8) is placed between each spring support (81) of the structural part (2) and each stiff element (6) of the aesthetical part (1).

15. Insert for vehicle wheels according to any one of the previous claims, wherein the insert comprises a plurality of aesthetical parts (1) and a plurality of structural parts (2) wherein the aesthetical parts and/or the structural parts (2) can be connected by connecting portions (11).

## Patentansprüche

1. Einsatz für Fahrzeugräder, mit:
einem strukturellen Teil (2), das Befestigungselemente (3) aufweist, die dafür ausgebildet sind, das strukturelle Teil an einem Rad zu befestigen; und
einem ästhetischen Teil (1), das steife Elemente (6) und Halteelemente (7) zum Festhalten des ästhetischen Teils (1) an dem strukturellen Teil (2) aufweist, wobei das ästhetische Teil (1) und das strukturelle Teil (2) zwischen einer vormontierten Position und einer montierten Position bewegbar sind, wobei das ästhetische Teil (1) und das strukturelle Teil (2) untrennbar voneinander in der vormontierten Position sind, **dadurch gekennzeichnet, dass**
die steifen Elemente (6) die Befestigungselemente (3) gegen das Rad biegen und drücken, wenn sich das ästhetische Teil (1) von der vormontierten Position zu der montierten Position bewegt.

2. Einsatz für Fahrzeugräder nach Anspruch 1, bei dem, wenn das ästhetische Teil (1) und das strukturelle Teil (2) in der montierten Position sind, ein Spalt zwischen ihnen ist.

3. Einsatz für Fahrzeugräder nach den Ansprüchen 1 und 2, bei dem, wenn das ästhetische Teil (1) und das strukturelle Teil (2) in der montierten Position sind, der Spalt zwischen ihnen gegenüber dem Spalt in der vormontierten Position vermindert ist, und die steifen Elemente (6) die komplementären Befestigungselemente (3) biegen und drücken.

4. Einsatz für Fahrzeugräder nach einem der vorhergehenden Ansprüche, bei dem das strukturelle Teil (2) Stützbereiche (5) zum Kontaktieren des Rades aufweist.

5. Einsatz für Fahrzeugräder nach einem der vorhergehenden Ansprüche, bei dem die Halteelemente (7) einen ersten Abschnitt (71) und/oder einen zweiten Abschnitt (72) aufweisen.

6. Einsatz für Fahrzeugräder nach Anspruch 5, bei dem die Halteelemente (7) den ersten Abschnitt (71) aufweisen und bei dem in der vormontierten Position das strukturelle Teil (2) von dem ersten Abschnitt (71) der Halteelemente (7) gehalten wird.

7. Einsatz für Fahrzeugräder nach Anspruch 5, bei dem die Halteelemente (7) den zweiten Abschnitt (72) aufweisen und bei dem in der montierten Position das strukturelle Teil (2) von dem zweiten Abschnitt (72) der Halteelemente (7) gehalten wird.

8. Einsatz für Fahrzeugräder nach Anspruch 5, bei dem die Halteelemente (7) den ersten Abschnitt (71) und den zweiten Abschnitt (72) aufweisen und bei dem der erste und der zweite Abschnitt (71, 72) in dem gleichen Halteelement (7) enthalten sind, wobei der erste und der zweite Abschnitt (71, 72) durch einen verdickten Abschnitt (74), der eine größere Dicke als der Rest des Haltelements hat, voneinander getrennt sind.

9. Einsatz für Fahrzeugräder nach einem der vorhergehenden Ansprüche, bei dem jedes Befestigungselement (3) einen nach außen gerichteten Vorsprung (31) aufweist.

10. Einsatz für Fahrzeugräder nach einem der vorhergehenden Ansprüche, bei dem das strukturelle Teil (2) komplementäre Elemente (4) aufweist, die komplementär zu den Halteelementen (7) sind.

11. Einsatz für Fahrzeugräder nach Anspruch 10, bei dem jedes komplementäre Element (4) eine Wand (41) und eine Lasche (42) aufweist.

12. Einsatz für Fahrzeugräder nach einem der vorhergehenden Ansprüche, bei dem das strukturelle Teil (2) Löcher (10) für den Durchtritt der Halteelemente (7) aufweist.

13. Einsatz für Fahrzeugräder nach einem der vorhergehenden Ansprüche, bei dem das strukturelle Teil (2) Löcher (9) für den Durchtritt der steifen Elemente (6) aufweist.

14. Einsatz für Fahrzeugräder nach einem der vorhergehenden Ansprüche, bei dem eine Feder (8) zwischen jeder Federauflage (81) des strukturellen Teils (2) und jedem steifen Element (6) des ästhetischen Teils (1) angeordnet ist.

15. Einsatz für Fahrzeugräder nach einem der vorhergehenden Ansprüche, bei dem der Einsatz eine Vielzahl von ästhetischen Teilen (1) und eine Vielzahl von strukturellen Teilen (2) aufweist, wobei die ästhetischen Teile und/oder die strukturellen Teile (2) durch Verbindungsabschnitte (11) miteinander verbunden werden können.

## Revendications

1. Insert pour roues de véhicule, comprenant :
une partie structurale (2) comprenant des éléments de fixation (3) configurés pour fixer la partie structurale à une roue ; et
une partie esthétique (1) comprenant des éléments rigides (6) et des éléments de retenue (7) pour retenir la partie esthétique (1) sur la partie structurale (2), dans lequel la partie esthétique (1) et la partie structurale (2) sont mobiles entre une position préassemblée et une position assemblée, la partie esthétique (1) et la partie structurale (2) étant inséparables l'une de l'autre dans la position préassemblée, **caractérisé en ce que** les éléments rigides (6) se plient et pressent les éléments de fixation (3) sur la roue lorsque la partie esthétique (1) se déplace de la position préassemblée à la position assemblée.

2. Insert pour roues de véhicule selon la revendication 1, dans lequel lorsque la partie esthétique (1) et la partie structurale (2) sont en position préassemblée, il y a un écart entre elles.

3. Insert pour roues de véhicule selon les revendications 1 et 2, dans lequel lorsque la partie esthétique (1) et la partie structurale (2) sont en position assemblée, l'écart entre elles est réduit par rapport à l'écart dans la position préassemblée, et les éléments rigides (6) se plient et exercent une pression sur les éléments de fixation (3) complémentaires.

4. Insert pour roues de véhicule selon l'une quelconque des revendications précédentes, dans lequel la partie structurale (2) comprend des zones de support (5) pour entrer en contact avec la roue.

5. Insert pour roues de véhicule selon l'une quelconque des revendications précédentes, dans lequel les éléments de retenue (7) comprennent une première portion (71) et/ou une seconde portion (72).

6. Insert pour roues de véhicule selon la revendication 5, dans lequel les éléments de retenue (7) comprennent la première portion (71) et dans lequel dans la position de préassemblage, la partie structurale (2) est retenue par la première portion (71) des éléments de retenue (7).

7. Insert pour roues de véhicule selon la revendication 5, dans lequel les éléments de retenue (7) comprennent la seconde portion (72) et dans lequel dans la position d'assemblage, la partie structurale (2) est retenue par la seconde portion (72) des éléments de retenue (7).

8. Insert pour roues de véhicule selon la revendication 5, dans lequel les éléments de retenue (7) comprennent la première portion (71) et la seconde portion (72) et dans lequel les première et seconde portions (71, 72) sont incluses dans le même élément de retenue (7), les première et seconde portions (71, 72) étant séparées par une portion épaissie (74), ayant une épaisseur supérieure au reste de l'élément de retenue.

9. Insert pour roues de véhicule selon l'une quelconque des revendications précédentes, dans lequel chaque élément de fixation (3) comprend une saillie (31) orientée vers l'extérieur.

10. Insert pour roues de véhicule selon l'une quelconque des revendications précédentes, dans lequel la partie structurale (2) comprend des éléments complémentaires (4) qui sont en complémentarité avec les éléments de retenue (7).

11. Insert pour roues de véhicule selon la revendication 10, dans lequel chaque élément complémentaire (4) comprend une paroi (41) et une patte (42).

12. Insert pour roues de véhicule selon l'une quelconque des revendications précédentes, dans lequel la partie structurale (2) comprend des trous (10) pour le passage des éléments de retenue (7).

13. Insert pour roues de véhicule selon l'une quelconque des revendications précédentes, dans lequel la partie structurale (2) comprend des trous (9) pour le passage des éléments rigides (6).

14. Insert pour roues de véhicule selon l'une quelconque des revendications précédentes, dans lequel un ressort (8) est placé entre chaque support de ressort (81) de la partie structurale (2) et chaque élément rigide (6) de la partie esthétique (1).

15. Insert pour roues de véhicule selon l'une quelconque des revendications précédentes, dans lequel l'insert comprend une pluralité de parties esthétiques (1) et une pluralité de parties structurales (2), dans lequel les parties esthétiques et/ou les parties structurales (2) peuvent être reliées par des portions de liaison (11).
